# EUROPÄISCHE PATENTANMELDUNG

(11) **EP 1 253 036 A1**
(43) Veröffentlichungstag der Anmeldung: **30.10.2002**
(21) Anmeldenummer: 01109973.6
(22) Anmeldetag: 24.04.2001
(51) Int. Cl.: B60K 6/04

(54) **Antriebseinheit mit integriertem Elektromotor**

(71) Anmelder: Voith Turbo GmbH & Co. KG, 89522 Heidenheim (DE)
(72) Erfinder: Klement, Werner, Prof., 89520 Heidenheim (DE); Edelmann, Peter, 89522 Heidenheim (DE)
(74) Vertreter: Dr. Weitzel & Partner

(57) **Zusammenfassung**

Bei einer Antriebseinheit für ein Hybridfahrzeug ist eine wenigstens als Elektromotor betreibbare elektrische Maschine (12) im Gehäuse (11) der Getriebebaueinheit (5) integriert.

## Beschreibung

Die Erfindung betrifft eine Antriebseinheit, im einzelnen mit den Merkmalen aus dem Oberbegriff des Anspruchs 1.

Aus dem Stand der Technik sind eine Vielzahl von Hybridantrieben in unterschiedlichsten Ausführungen und die nach unterschiedlichen Konzeptstrategien betrieben werden, bekannt. Die Druckschrift DE 41 24 479 A1 offenbart einen Hybridantrieb, umfassend eine Brennkraftmaschine und ein über eine Kupplung verbundenes, als Stellkoppelgetriebe mit elektrischem Regelzweig gestaltetes stufenloses Getriebe. Dabei werden die mit den Elektromaschinen in Antriebsverbindung stehenden Wellen des Leistungsverzweigungsgetriebes mittels einer ansteuerbaren Kupplung drehfest verbunden, so daß sämtliche Elektromaschinen über das verblockte Leistungsverzweigungsgetriebe einen gemeinsamen Antriebsmotor oder einen gemeinsamen Generator bilden. Bei dieser Ausführung sind die einzelnen Einheiten - Elektromotoren und Stellkoppelgetriebe zu einer baulichen Einheit zusammengefaßt und über eine Trennkupplung von der Verbrennungskraftmaschine abkoppelbar. Allerdings bedingt diese Ausführung das Vorhandensein von mindestens zwei elektrischen Maschinen und dem Stellkoppelgetriebe um die Stufenlosigkeit von Drehzahl und Moment am Ausgang zu gewährleisten. Die Drehzahl-/Drehmomentwandlung wird somit allein über die Baueinheit aus den beiden elektrischen Maschinen und dem Stellkoppelgetriebe gewährleistet. Dem Stellkoppelgetriebe kommt dabei nicht die Funktion einer Getriebebaueinheit im üblichen Sinne zu, sondern dieses dient lediglich der Zusammenführung der einzelnen Leistungsanteile von der Verbrennungskraftmaschine oder dem ersten Elektromotor und dem zweiten Elektromotor, wobei diese Leistungsanteile zur Abtriebsleistung summiert werden. Die erste elektrische Antriebsmaschine kann zwar auch mittels einer Trennkupplung von der Verbrennungskraftmaschine abgekoppelt werden und arbeitet dann zur elektrischen Leistungsbereitstellung autark. Zur Realisierung einer Drehzahl/Drehmomentwandlung zwischen Eingang der Getriebebaueinheit und Ausgang sind jedoch beide elektrischen Antriebsmaschinen erforderlich.

Ein anderes Konzept für Hybridantriebe besteht darin, daß eine wahlweise Versorgung über die Verbrennungskraftmaschine oder eine elektrische Antriebsmaschine erfolgt, wobei die elektrische Antriebsmaschine in einem konventionellen Antriebsstrang aus Verbrennungskraftmaschine, Getriebebaueinheit und entsprechender Kopplung mit den anzutreibenden Rädern, beispielsweise über ein Differential, dem Getriebe als separate zweite Antriebsquelle zugeordnet ist und mit diesem beziehungsweise einem Eingang des Getriebes wahlweise koppelbar ist. Diese Lösung erfordert jedoch bereits bei Auslegung des Antriebsstrangs die Berücksichtigung des erforderlichen Platzes für die separate zweite Antriebsquelle und des weiteren die Anschluß- und Ansteuerungsmöglichkeiten.

Beide aus dem Stand der Technik bekannten Lösungen sind durch einen erhöhten Bauteil- und Steuerungsaufwand charakterisiert. Des weiteren bauen diese aufgrund der erforderlichen räumlichen Trennung zwischen Energiequelle und Getriebebaueinheit beziehungsweise dem erforderlichen Vorsehen mehrerer elektrischer Antriebsmaschinen im allgemeinen in axialer Richtung sehr lang.

Der Erfindung liegt daher die Aufgabe zugrunde, eine Antriebseinheit für den Einsatz in Antriebssystemen - insbesondere unabhängig, ob ein Hybridantrieb realisiert werden soll oder nicht - zu entwickeln, mit welcher mit minimaler Bauteilanzahl und geringer Baulänge eine Vielzahl unterschiedlichster Funktionen realisiert werden kann.

Die erfindungsgemäße Lösung ist durch die Merkmale der Ansprüche 1 und 24 charakterisiert. Vorteilhafte Ausgestaltungen sind in den Unteransprüchen wiedergegeben.

Die Antriebseinheit umfaßt eine Getriebebaueinheit mit mindestens einem Eingang und mindestens einem Ausgang sowie einem Gehäuse. Das Gehäuse kann dabei einteilig oder mehrteilig ausgeführt sein. Des weiteren ist eine, wenigstens als Elektromtor betreibbare elektrische Maschine, umfassend einen Rotor und eine Statoreinheit vorgesehen. Erfindungsgemäß ist die elektrische Maschine im Gehäuse der Getriebebaueinheit integriert. Der Rotor der elektrischen Maschine ist drehfest mit einem leistungsübertragenden Element zwischen dem Eingang und dem Ausgang der Getriebebaueinheit verbindbar. Diese Lösung bietet den Vorteil, daß zum einen eine vollständig autarke Antriebseinheit geschaffen werden kann, welche keine zusätzliche Antriebsmaschine benötigt, da die Antriebsmaschine in Form des Elektromotors bereits im Getriebe integriert ist und mit einem leistungsübertragenden Element oder mit diesem drehfest gekoppelten Verbindungselementen zwischen Eingang und Ausgang der Getriebebaueinheit bei gewünschter elektronischer Leistungsbereitstellung drehfest verbunden ist. Diese Antriebseinheit kann somit als selbständiges Antriebsaggregat mit gleichzeitiger Möglichkeit zur Drehzahl-/Drehmomentwandlung bei entsprechender Ausgestaltung der leistungsübertragenden Elemente der Getriebebaueinheit ausgeführt sein. Bei Integration der Antriebseinheit in einem Antriebssystem mit Verbrennungskraftmaschine können durch einfache Modifikation an der Antriebseinheit mehrere unterschiedliche Konzepte beim Betrieb des Antriebssystems verfolgt werden. Denkbar ist dabei
a) die rein mechanische Übertragung zwischen Verbrennungskraftmaschine und einem anzutreibenden Aggregat oder Element, beim Einsatz im Fahrzeug beispielsweise der Achse oder den Rädern
b) eine kombinierte mechanische und elektrische Leistungsübertragung durch Bereitstellung eines ersten Leistungsanteils von der Verbrennungskraftmaschine und eines zweiten Leistungsanteils von der elektrischen Antriebsmaschine, wobei beide Leistungsanteile an einem leistungsübertragenden Element der Getriebebaueinheit in Form eines Summiergetriebes zusammengeführt werden
c) der rein elektrische Betrieb, bei welchem die Verbrennungskraftmaschine vollständig vom Antriebsstrang entkoppelt wird und
   zusätzlich bei allen genannten Möglichkeiten im Brems- oder Schubbetrieb
d) beim Generatorbetrieb die Umwandlung mechanischer Energie in elektrische Energie und Einspeisung in einen Speicher oder ein Netz und
e) bei entsprechender Ansteuerung der elektrischen Maschine, insbesondere dem Aufbau eines entsprechenden elektromagnetischen Feldes die Nutzung als Bremseinrichtung.

Des weiteren kann der Rotor bei Nichtbestromung der elektrischen Maschine und Kopplung mit einem leistungsübertragenden Element mitgeschleppt und somit die elektrische Maschine im Leerlauf betrieben werden und als Leerlaufverluste nur die Leistung zu verbrauchen ist, die durch das Mitschleppen benötigt wird. Die elektrische Maschine ist dabei zumindest zu- und abschaltbar.

Entsprechend der Anordnung im Leistungsfluß und Anbindung des Rotors der elektrischen Maschine an ein leistungsübertragendes Element sowie der Ausgestaltung der leistungsübertragenden Elemente ist die Antriebseinheit mit zusätzlichen Funktionselementen zu versehen. Unter den leistungsübertragenden Elementen werden dabei jegliche Elemente verstanden, die eine Leistungsübertragung zwischen zwei Bauelementen ermöglichen und die zusätzlich des weiteren die Funktion der Drehzahl/Drehmomentwandlung übernehmen können. Zu diesen Getriebeelementen gehören somit - je nach Art des Getriebes -
a) hydrodynamische Bauelemente und/oder
b) hydrostatische Bauelemente und/oder
c) mechanische Schaltstufen und/oder
d) mechanische stufenlose Getrieteile.

Als leistungsübertragende Elemente werden dabei im einzelnen die einzelnen an der Leistungsübertragung beteiligten Elemente bezeichnet. Bei Schaltstufen sind dies beispielsweise einzelne Stirnräder oder Planetenräder beziehungsweise die mit diesen gekoppelten Verlängerungen, Wellen oder Hohlwellen und die zwischen einzelnen Elementen erforderlichen Verbindungselemente.

Der Rotor ist entweder drehfest mit einem leistungsübertragenden Element zwischen dem Eingang und dem Ausgang der Getriebeeinheit verbunden oder aber lösbar über ein Funktiionselement in Form einer schaltbaren Kupplung. Im erstgenannten Fall bedeutet dies, daß bei Einbindung in ein Antriebssystem mit Verbrennungskraftmaschine und Leistungsübertragung von dieser zum Ausgang der Getriebebaueinheit bei nicht betätigter elektrischer Antriebsmaschine diese beziehungsweise der Rotor der elektrischen Maschine mitgeschleppt wird. Ein erster Hauptleistungsanteil gelangt somit von der Verbrennungskraftmaschine zum Ausgang, während ein geringer zweiter Leistungsanteil zum Schleppen des Rotors benötigt wird. Die elektrische Antriebsmaschine kann dabei jedoch derart konzipiert sein, daß bei dieser Betriebsweise gleichzeitig die dabei am Rotor vorhandene mechanische Energie in elektrische Energie umgewandelt wird, das heißt die elektrische Maschine als Generator betrieben wird und dieser Leistungsanteil in einen Speicher, beispielsweise in Form einer Batterie oder beispielsweise bei Anbindung an ein Bordnetz eines Fahrzeuges in dieses eingespeist werden kann. Dies bietet den Vorteil, daß eine ständige Energiebereitstellung, beispielsweise zur Ausnutzung für den elektrischen Antrieb von Nebenabtrieben oder andere Funktionen gewährleistet werden kann. Bei dieser ständig drehfesten Verbindung ist es jedoch zur vollständigen autarken elektrischen Energieversorgung, das heißt Bereitstellung der Antriebsleistung allein über die erfindungsgemäß gestaltete Antriebseinheit erforderlich, diese von der Antriebsmaschine, beispielsweise dem Verbrennungsmotor zu entkoppeln. Dies kann zum einen über ein dafür vorgesehenes separates Schaltelement in Form einer schaltbaren Kupplung oder aber durch Ausnutzung der in der Getriebebaueinheit den leistungsübertragenden Elementen ohnehin zugeordneten Schaltelemente realisiert werden. Das Vorsehen einer separaten Trennkupplung kann bei Integration der Antriebseinheit in einem Antriebssystem dabei zwischen Verbrennungskraftmaschine und Getriebebaueinheit erfolgen. Die Trennkupplung kann jedoch auch in der Getriebebaueinheit, das heißt im Gehäuse integriert sein. Bei Bereitstellung dieser Funktion über die leistungsübertragenden Elemente der Getriebebaueinheit kann dies bei Ausführung einer Getriebebaueinheit mit mechanischen Schaltstufen durch die Lösung der einzelnen Schaltelemente und damit bedingt vollständigen Leistungsunterbrechung realisiert werden, wobei in diesem Fall die elektrische Antriebsmaschine an ein Getriebeelement gekoppelt sein muß, welches in Leistungsflußrichtung zwischen Eingang und Ausgang der Getriebebaueinheit betrachtet den Schaltelementen nachgeordnet ist. Eine andere Möglichkeit besteht darin, beispielsweise bei Ausführung als hydrodynamisch-mechanisches Verbundgetriebe bei Anbindung des Rotors der elektrischen Maschine hinter der hydrodynamischen Baueinheit die hydrodynamische Baueinheit zu entleeren und gleichzeitig auch die zur Überbrückung vorgesehene Überbrückungskupplung zu lösen. Die letztgenannten Möglichkeiten stellen dabei besonders vorteilhafte Anordnungs- und Anbindungsmöglichkeiten dar, da in diesem Fall bereits ohnehin zur Funktion der Getriebebaueinheit vorhandene Elemente genutzt werden, um eine entsprechende Abkopplung zu erzielen und somit auf separate zusätzliche Bauelemente verzichtet werden kann.

Bezüglich der räumlichen Anordnung des Elektromotors im Getriebe bestehen folgende Möglichkeiten:
a) unmittelbar hinter dem Eingang vor den leistungsübertragenden und insbesondere drehzahl- und/oder drehmomentbeeinflussenden Elementen
b) vor dem Ausgang, jedoch hinter den leistungsübertragenden und drehzahl- und/oder drehmomentbeeinflussenden Elementen
c) räumlich zwischen den einzelnen leistungsübertragenden und drehzahl- und/oder drehmomentbeeinflussenden Elementen, beispielsweise bei Ausführung als hydrodynamische-mechanische Verbundgetriebe zwischen hydrodynamischem Bauelement und mechanischem Getriebeteil.

Bezüglich der Anbindung an die leistungsübertragenden und drehzahlund/oder drehmomentbeeinflussenden Elemente in Kraftflußrichtung betrachtet bestehen ebenfalls eine Mehrzahl von Möglichkeiten, die sich mit der räumlichen Anordnung zum Teil überdecken, jedoch hinsichtlich der Funktion auch unterschiedliche Wirkungsweisen bedingen können. Denkbar ist dabei eine Anbindung in Leistungsflußrichtung betrachtet an den Triebstrang vor den leistungsübertragenden Elementen bei räumlicher Anordnung vor oder im Bereich der leistungsübertragenden Elemente oder eine Anbindung in Kraftflußrichtung hinter den leistungsübertragenden Elementen bei räumlicher Anordnung hinter oder im Bereich der leistungsübertragenden Elemente oder des weiteren eine Anbindung an ein leistungsübertragendes Element an beliebiger Stelle zwischen einer Vielzahl von leistungsübertragenden Elementen. Diese Möglichkeiten sind immer dann gegeben, wenn der Rotor nicht direkt sondern beispielsweise über weitere Übertragungselemente an die leistungsübertragenden Elemente der Getriebebaueinheit gekoppelt ist.

Die Getriebebaueinheit kann als Automatgetriebe, automatisiertes Schaltoder stufenloses Getriebe oder Schaltgetriebe ausgeführt sein. Die beiden ersten Möglichkeiten bieten den Vorteil einer möglichen Ausnutzung der diesen zugeordneten Steuereinrichtung zur Realsierung unterschiedlicher Funktionen der elektrischen Antriebsmaschine - Antrieb oder Bremseinrichtung oder Einspeisung von elektrischer Energie in einen Speicher oder ein Netz.

Die Ausführung der elektrischen Maschine ist nicht auf einen bestimmten Typ begrenzt, insbesondere auch hinsichtlich der Flußführung.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung ein Antriebssystem mit einer erfindungsgemäß gestalteten Antriebseinheit;
- Figur 2a bis 2d: verdeutlichen in schematisiert vereinfachter Darstellung Anordnungs- und Anbindungsmöglichkeiten des Rotors einer elektrischen Maschine an ein Element einer Getriebebaueinheit;
- Figur 3: verdeutlicht in schematisiert vereinfachter Darstellung eine vorteilhafte Ausführung einer Antriebseinheit mit hydrodynamisch-mechanischem Verbundgetriebe.

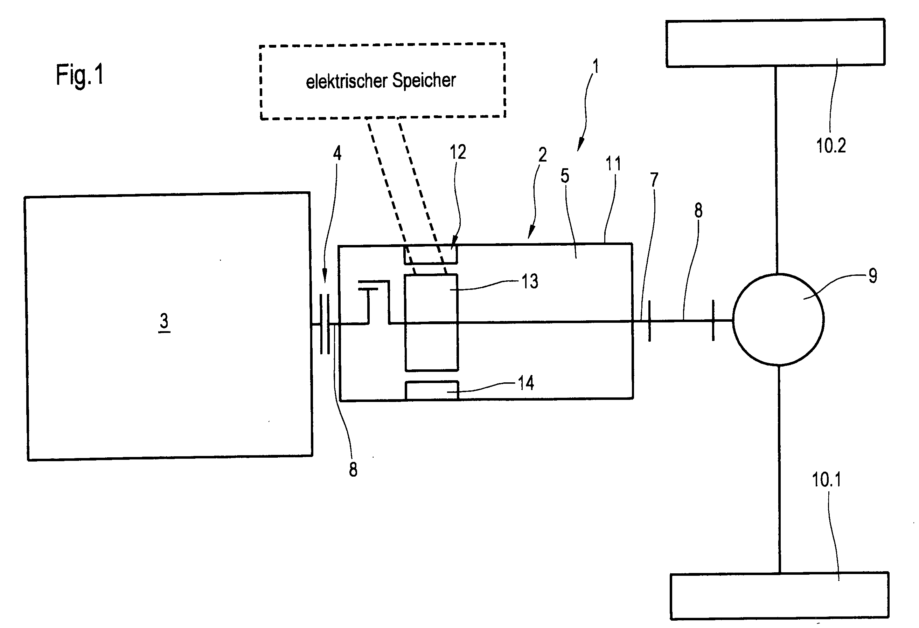

Die Figur 1 verdeutlicht in schematisch vereinfachter Darstellung anhand eines Antriebssystems 1 den Grundaufbau und die Funktionsweise einer erfindungsgemäß gestalteten Antriebseinheit 2. Das Antriebssystem umfaßt eine Antriebsmaschine 3, welche mit der Antriebseinheit 2 drehfest verbindbar ist, entweder direkt oder beispielsweise auch über eine schaltbare Kupplung 4, welche als Trennkupplung fungiert. Die Antriebsmaschine 3 ist dabei bei konventionellen Antriebssystemen 1 als Verbrennungskraftmaschine ausgeführt. Die erfindungsgemäß gestaltete Antriebseinheit 2 umfaßt eine Getriebebaueinheit 5 mit mindestens einem Eingang 6 und einem Ausgang 7. Der Eingang 6 ist dabei drehfest mit der Antriebsmaschine 3, beispielsweise über die schaltbare Kupplung 4 verbindbar. Der Ausgang 7 ist dabei wenigstens mittelbar, das heißt über weitere Übertragungselemente, beispielsweise in Form eines Wellenstranges 8 und über ein Differential 9 mit den anzutreibenden Rädern 10.1 und 10.2 gekoppelt. Die erfindungsgemäß gestaltete Antriebseinheit 2, insbesondere die zu dieser gehörige Getriebebaueinheit 5 umfaßt ferner ein Gehäuse 11. Des weiteren ist eine als Motor betreibbare elektrische Maschine 12 vorgesehen. Die elektrische Maschine 12 ist erfindungsgemäß im Gehäuse 11 der Getriebebaueinheit 5 integriert. Die elektrische Maschine 12 umfaßt einen Rotor 13 und eine Statoreinheit 14. Der Rotor 13 ist erfindungsgemäß des weiteren entweder direkt oder indirekt über weitere Verbindungselemente, beispielsweise Wellen oder Hohlwellen mit einem leistungsübertragenden und eventuell auch zusätzlich theoretisch die Möglichkeit zur Drehzahl-/Drehmomentwandlung aufweisenden Element der Getriebebaueinheit 5 koppelbar. Die Statoreinheit 14 ist dabei vorzugsweise im Bereich des Innenumfanges des Gehäuses 11 beziehungsweise einer am Getriebegehäuse gelagerten Zwischenwand ortsfest gelagert. Die elektrische Maschine 12 ist als Innenläufer ausgeführt. Das Leistung übertragende und eventuell zusätzlich eine Wandlung von Drehzahl und Drehmoment ermöglichende Element wird nachfolgend als Getriebeelement bezeichnet. Bei diesem kann es sich - je nach Ausführung des Getriebes - um das Anfahrelement, beispielsweise eine hydrodynamische Kupplung oder einen Drehzahl/Drehmomentenwandler, oder ein Stirnrad, ein Planetenrad beziehungsweise eines der Elemente eines Planetenradsatzes beziehungsweise mit diesen gekoppelte Wellen beziehungsweise Hohlwellen handeln. Der Rotor 13, welcher in Triebverbindung mit einem Element zur Leistungsübertragung und eventuell möglicher Drehzahl/Drehmomentenwandlung der Getriebebaueinheit 5 steht, kann dabei in konstruktiver Ausführung entweder beidseitig oder aber fliegend am jeweils anzutreibenden Getriebeelement gelagert werden. Der Rotor 13 kann dabei in ständiger Triebverbindung mit dem Getriebeelement stehen oder aber über eine, hier im einzelnen nicht dargestellte schaltbare Kupplung trennbar mit dem entsprechenden Getriebeelement koppelbar sein. Bezüglich der Ausgestaltung der Getriebebaueinheit 5 bestehen eine Vielzahl von Möglichkeiten. Diese umfaßt mindestens eine Drehzahl/Drehmomentwandlungseinrichtung, welche zwischen dem Eingang 6 und dem Ausgang 7 angeordnet ist. Je nach Zuordnung beziehungsweise Kopplung des Rotors 13 mit einem Getriebeelement des Drehzahl/Drehmomentwandlers können in einem Antriebssystem 1 gemäß Figur 1 unterschiedliche Funktionen realisiert werden. Zum einen besteht die Möglichkeit, die Leistung von der Verbrennungskraftmaschine in Form der Antriebsmaschine 3 rein mechanisch ohne Ausnutzung einer theoretisch möglichen bereitstellbaren zusätzlichen Antriebsleistung durch die elektrische Maschine zu übertragen. Eine zweite Möglichkeit besteht darin, sowohl Leistung über die Verbrennungskraftmaschine als auch die elektrische Maschine einzuspeisen und in der Getriebebaueinheit 5 zusammenzufassen, wobei über die Verbrennungskraftmaschine 3 dann ein erster Leistungsanteil und die elektrische Maschine 12 ein zweiter Leistungsanteil bereitgestellt wird, welche an der Drehzahl/Drehmomentwandlungseinrichtung zusammengeführt werden, wobei dieses dann die Funktion eines Summiergetriebes ausführt. Eine weitere Möglichkeit besteht je nach Anordnung der elektrischen Maschine 12 darin, die Leistung allein durch die elektrische Maschine 12 bereitzustellen und über den jeweils noch in Kraftflußrichtung liegenden Teil des Getriebes übertragen wird, wobei entweder die Verbrennungskraftmaschine entkoppelt oder geschleppt werden kann. Im erstgenannten Fall wird der Hauptleistungsanteil an einer Stelle im Getriebe eingeleitet und über den restlichen in Kraftflußrichtung zum Abtrieb liegenden Teil übertragen, wobei die in Richtung Eingang vor dem Getriebeelement mit angekoppeltem Rotor 13 liegenden Getriebeteile mitgeschleppt werden. Diese zweite Leistungsanteil ist jedoch sehr gering. Im zweiten Fall - bei noch angekoppelter Verbrennungskraftmaschine wird auch diese geschleppt. Der zweite Leistungsanteil ist daher wesentlich höher.

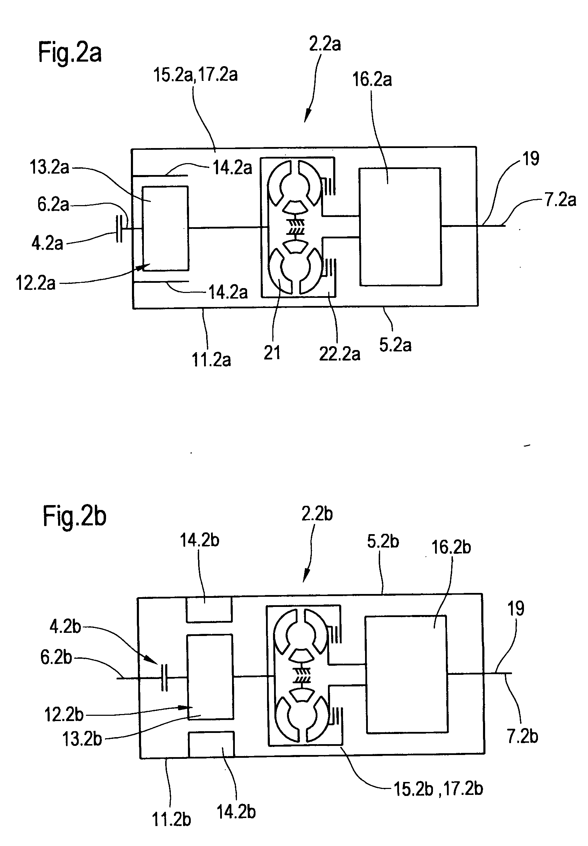

Die Figuren 2a bis 2d verdeutlichen in schematisiert vereinfachter Darstellung grundsätzliche Möglichkeiten der Integration der elektrischen Maschine 12 in der Getriebebaueinheit 5 und die Kopplung mit entsprechenden Getriebeelementen. Die in den Figuren 2a bis 2d beispielhaft gewählten Getriebestrukturen sind dadurch charakterisiert, daß diese jeweils einen hydrodynamischen Getriebeteil 15 und einen mechanischen Getriebeteil 16 umfassen, welche dem hydrodynamischen Getriebeteil 15 nachgeschaltet ist. Die Ausgestaltung des mechanischen Getriebeteils 16 kann dabei vielgestaltig sein, beispielsweise in Form eines Stufengetriebes oder eines stufenlosen Getriebes oder einer Kombination aus beiden. Bei Ausführung als Nachschaltstufengetriebe umfaßt dieses Stirnrad- oder Planetenradsätze. Der hydrodynamische Getriebeteil 15 umfaßt ein hydrodynamisches Bauelement, beispielsweise in Form eines hydrodynamischen Drehzahl-/Drehmomentwandlers 17 oder einer hydrodynamischen Kupplung 18. Zur Ausnutzung der Vorteile hydrodynamischer Leistungsübertragung in unteren Leistungsbereichen und der Ausschaltung der Nachteile hydrodynamischer Übertragungselemente in oberen Leistungsbereichen ist eine Überbrückungskupplung 22 in Form einer schaltbaren Kupplung vorgesehen. Die in den Figuren 2a bis 2d dargestellten Ausführungsmöglichkeiten stellen dabei jeweils Beispiele dar, wobei die hydrodynamischen Komponenten frei gewählt wurden und gegeneinander austauschbar sind.

Die Figur 2a verdeutlicht eine Ausführung einer erfindungsgemäß gestalteten Antriebseinheit 2.2a mit einem hydrodynamischen Getriebeteil 15.2a, umfassend einen hydrodynamischen Drehzahl-/Drehmomentwandler 17.2a und einen mechanischen Getriebeteil 16.2a, der dem hydrodynamischen Getriebeteil 15.2a nachgeschaltet ist und beispielsweise als Stufengetriebe ausgeführt ist. Der Ausgang 19 des mechanischen Getriebeteils 16.2a bildet den Ausgang 7.2a der Getriebebaueinheit 5.2a. Die elektrische Maschine 12.2a, insbesondere deren Rotor 13.2a ist im dargestellten Fall dem hydrodynamischen Getriebeteil 15.2a, welcher auch als Anfahreinheit fungiert, vorgeschaltet. Der Rotor 13.2a ist dabei mit dem Eingang 6.2a der Getriebebaueinheit 5.2a drehfest gekoppelt und des weiteren mit dem Antrieb 20 des hydrodynamischen Getriebeteils 15.2a, welcher vom Primärrad 21 gebildet wird. Zur mechanischen Durchkopplung zwischen dem Eingang 6.2a der Getriebebaueinheit 5.2a und dem mechanischen Getriebeteil 16.2a ist dem Anfahrelement in Form des hydrodynamischen Drehzahl-/Drehmomentwandlers 17.2a eine schaltbare Kupplung 22.2a als Überbrückungskupplung zugeordnet. Durch die räumliche Anordnung und ebenfalls Anbindung der elektrischen Maschine 12.2a in Kraftflußrichtung bei Leistungsübertragung vom Eingang 6.2a zum Ausgang 7.2a betrachtet vor dem hydrodynamischen Getriebeteil 15.2a bedingt eine ständige Kopplung der elektrischen Antriebsmaschine, insbesondere des Rotors 13.2a mit dem Eingang 6.2a, was im Falle einer Ankopplung des Eingangs 6.2a an eine Verbrennungskraftmaschine zum einen bei Erzeugung der Antriebsleistung allein über die elektrische Maschine 12.2a zur Bereitstellung eines ersten Leistungsanteiles für den hydrodynamischen Getriebeteil 15.2a und zur weiteren Übertragung bis zum Ausgang 7.2a und des weiteren in Form eines zweiten Leistungsanteils zum Schleppen der mit dem Eingang 6.2a gekoppelten Verbrennungskraftmaschine führen würde. Des weiteren würde bei direktem Durchtrieb zwischen Verbrennungskraftmaschine und Eingang 6.2a die elektrische Maschine 12.2a im Generatorbetrieb betrieben. Dieser führt dazu, daß ebenfalls nur ein Teil der Leistung, welche von der Verbrennungskraftmaschine bereitgestellt wird, am Abtrieb 7.2a abgenommen werden kann und ein weiterer zweiter Teil aufgrund des Generatorbetriebes der elektrischen Maschine 12.2a beispielsweise wieder in elektrische Leistung umgewandelt oder ein Gegenmoment erzeugt wird. Zur Vermeidung des ersten Problems und zur Gewährleistung auch eines autarken elektrischen Antriebes über die elektrische Antriebsmaschine 12.2a ist eine schaltbare Kupplung 4.2a als Trennkupplung vorgesehen. Diese ist gemäß Figur 2a zur Antriebseinheit 2 gehörig ausgeführt und dem Eingang 6.2a zugeordnet, jedoch außerhalb des Gehäuses 11.2a. Eine andere Möglichkeit besteht gemäß Figur 2b darin, die schaltbare Kupplung 4.2b im Getriebegehäuse 11.2b der Getriebebaueinheit 5.2b der Antriebseinheit 2.2b zu integrieren. Der restliche Grundaufbau entspricht dem in der Figur 2a beschriebenen, weshalb für gleiche Elemente die gleichen Bezugszeichen verwendet werden, unter Hinzufügung des entsprechenden Figurenverweises. Zur Vermeidung von Verlustleistung durch Mitschleppen des Rotors kann dieser ebenfalls mittels einer schaltbaren Kupplung, beispielswesie vom Antriebsstrang getrennt werden, ohne die Leistungsübertragung zwischen Eingang 6.2b und Ausgang 7.2b zu unterbrechen, wenn der Eingang 6.2b an eine Antriebsmaschine, insbesondere Verbrennungskraftmaschine gekoppelt ist. In diesem Fall ist die schaltbare Kupplung 33.2b vorzugsweise konstruktiv im Rotor integriert, das heißt der Rotor 13.2b wird über die schaltbare Kupplung 33 auf einer mit dem Eingang 6.2a gekoppelten Welle beziehungsweise diesem selbst gelagert.

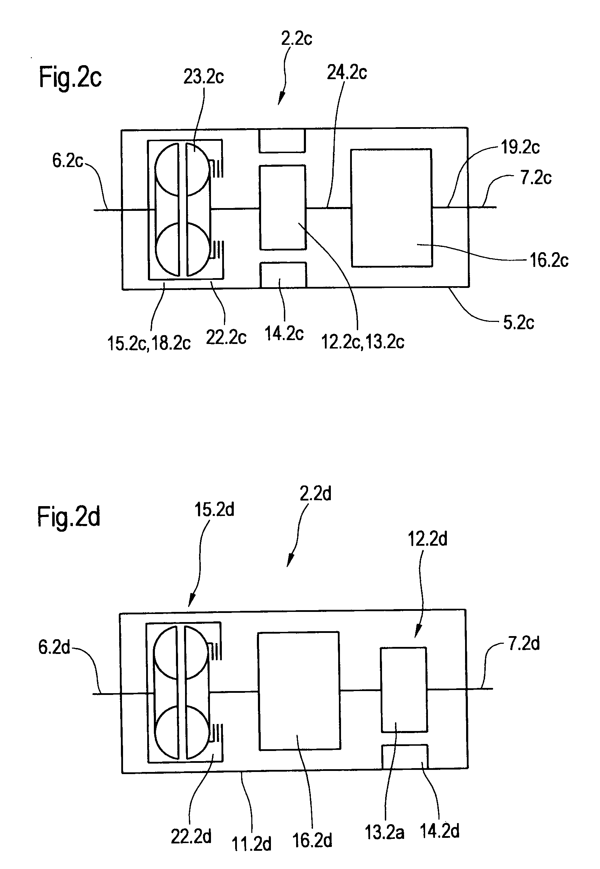

Die Figur 2c verdeutlicht eine weitere Ausführung einer erfindungsgemäß gestalteten Antriebseinheit 2.2c. Bei dieser ist die Getriebebaueinheit 5.2c ebenfalls als Verbundgetriebe, umfassend einen hydrodynamischen Getriebeteil 15.2c und einem mechanischen Getriebeteil 16.2c beispielsweise in Form von Nachschaltstufen ausgeführt. Der hydrodynamische Getriebeteil 15.2c ist als hydrodynamische Kupplung 18.2c ausgeführt. Denkbar ist auch die Ausgestaltung als hydrodynamischer Drehzahl-/Drehmomentwandler. Ebenfalls vorgesehen ist eine schaltbare Kupplung 22.2c in Form einer Überbrückungskupplung zur Realisierung des mechanischen Durchtriebes zwischen einem Eingang 6.2c und dem Abtrieb des hydrodynamischen Getriebeteils 15, insbesondere bei Ausgestaltung als hydrodynamische Kupplung 18 dem Sekundärrad 23.2c. Die elektrische Maschine 12.2c ist im dargestellten Fall räumlich hinter dem hydrodynamischen Geriebeteil 15.2c angeordnet und in Leistungsflußrichtung betrachtet vor dem mechanischen Getriebeteil 16.2c. Insbesondere ist der Rotor 13.2c drehfest mit dem Abtrieb, insbesondere dem Sekundärrad 23.3c beziehungsweise mit einer mit diesem drehfest gekoppelten Welle verbunden. Dies gilt des weiteren auch für den Eingang der Nachschaltstufen 16.2c, welcher hier mit 24.2c bezeichnet ist. Der Ausgang 19.2c des mechanischen Getriebeteils 16.2c bildet dabei gleichzeitig auch den Ausgang 7.2c der Getriebebaueinheit 5.2c. Der Stator beziehungsweise die Statoreinheit 14.2c der elektrischen Maschine 12.2c ist im Gehäuse gelagert. Der Rotor 13.2c ist drehfest mit dem Abtrieb des hydrodynamischen Getriebeteils, insbesondere dem Sekundärrad 23.2c und dem Eingang 24.2c des mechanischen Getriebeteiles 16.2c gekoppelt. Eine vollständige Entkopplung der Antriebseinheit 2.2c von einer Antriebsmaschine in Form einer Verbrennungskraftmaschine, welche üblicherweise mit dem Eingang 6.2c verbunden ist, erfolgt bei der dargestellten Ausführung zum einen über die Lösung der schaltbaren Kupplung in Form der Überbrückungskupplung 22.2c und der Entleerung des Bauelementes des hydrodynamischen Getriebeteils, hier der hydrodynamischen Kupplung 18.2c. In diesem Fall kann somit auch eine weitere Trennkupplung, wie in den Figuren 2 und 2b dargestellt, in Form der schaltbaren Kupplung 4.2 verzichtet werden.

Die Figur 2d verdeutlicht eine weitere Ausführung einer erfindungsgemäß gestalteten Antriebseinheit 2.2d, bei welcher die elektrische Maschine 12.2d hinter dem mechanischen Getriebeteil 16.2c in Kraftflußrichtung betrachtet vom Eingang 6.2d zum Ausgang 7.2d angeordnet ist, und bei welchem der Rotor drehfest mit dem Ausgang 7.2d gekoppelt ist. Die elektrische Maschine 12.2d, welche als Elektromotor fungiert, wird dabei direkt auf der Abtriebswelle angeordnet, was den Vorteil bietet, daß die vorhandenen Schaltelemente in den Nachschaltstufen 16.2d den Kraftfluß unterbrechen können und die Antriebsmaschine somit vom Getriebe 5.2d abkuppeln können. Des weiteren kann die Unterbrechung der Leistungsübertragung auch durch das gleichzeitige Lösen der schaltbaren Kupplung 22.2d und Entleerung des hydrodynamischen Kreislaufes im hydrodynamischen Getriebeteil 15.2d erfolgen.

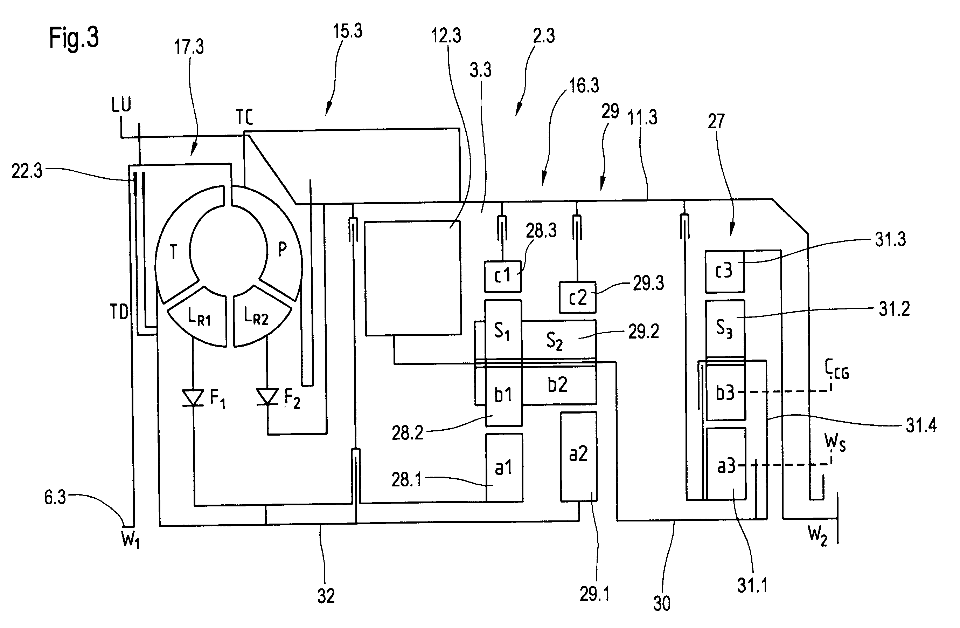

Die Figur 3 verdeutlicht anhand einer konkreten Getriebekonfiguration den Aufbau einer erfindungsgemäß gestalteten Antriebseinheit 2.3 in Form eines hydrodynamisch-mechanischen Verbundgetriebes 25 mit integrierter elektrischer Antriebsmaschine 3.3. Dieses umfaßt einen hydrodynamischen Getriebeteil 15.3 und einen mechanischen Getriebeteil 16.3. Der hydrodynamische Getriebeteil 15.3 umfaßt einen hydrodynamischen Drehzahl-/Drehmomentwandler 17.3 mit einem, mit dem Eingang 6.3 drehfest gekoppelten Primärrad P, einem Sekundärrad T und zwei Leiträdern L1 und L2. Der mechanische Getriebeteil 16.3 umfaßt einen mechanischen Drehzahl-/Drehmomentwandler 26 und einen, diesem in Kraftflußrichtung im Traktionsbetrieb nachgeschalteten Gruppensatz 27. Der mechanische Drehzahl-/Drehmomentwandler ist als abgewandelter Ravigneaux-Planetenradsatz ausgeführt. Dieser umfaßt einen ersten Planetenradsatz 28 und einen zweiten Planetenradsatz 29 und einen von beiden gemeinsam genutzten Planetenträger 30, welcher auch als Steg bezeichnet wird. Dieser stellt die Kopplung zwischen einem Getriebeelement des ersten und des zweiten Planetenradsatzes dar. Der erste Planetenradsatz 28 umfaßt ein Sonnenrad 28.1, Planetenräder 28.2 und ein Hohlrad 28.3. Der zweite Planetenradsatz 29 umfaßt ein Sonnenrad 29.1, Plantenräder 29.2 und ein Hohlrad 29.3. Der Gruppensatz 27 umfaßt wenigstens einen Planetenradsatz 31, welcher ein Sonnenrad 31.1, Planetenräder 31.2, ein Hohlrad 31.3 und einen Steg 31.4 aufweist.

Der hydrodynamische Getriebeteil 16.3, insbesondere das Primärrad P ist mit dem Eingang E, welcher wenigstens mittelbar mit einer, dem Antrieb dienenden Maschine koppelbar ist, vorzugsweise mit einem Schwungrad einer Verbrennungskraftmaschine drehfest verbunden. Das Sekundärrad T ist mit einer sogenannten Sekundärradwelle 32 drehfest verbunden. Um die Vorteile der hydrodynamischen Drehmomentübertragung mit Überbrückungskupplung 20.3 zu nutzen, welche im folgenden wären:
- selbsttätige stufenlose Einstellung des Verhältnisses zwischen der An- und Abtriebsdrehzahl entsprechenden Belastung auf der Abtriebseite;
- zur Verfügung stehen des maximalen Drehmomentes für einen Anfahrvorgang mit hoher Beschleunigung;
- Möglichkeit der Wärmeabfuhr durch Fremd- oder Oberflächenkühlung;
- Trennung des hydrodynamischen Drehzahl-/Drehmomentwandlers 17.3 vom Abtrieb, insbesondere vom Fahrzeug bei kleinen Antriebsdrehzahlen und Übertragung eines geringen Restmomentes, so daß ein Abwürgen der Antriebsmaschine von der Antriebseite her nicht möglich ist;
- verschleißfreie Leistungsübertragung;
und gleichzeitig die Nachteile einer hydrodynamischen Leistungsübertragung zu vermeiden, welche im wesentlichen in einem oftmals nicht ausreichend erzielbaren Wirkungsgrad besteht, um mit einem hydrodynamischen Getriebe allein arbeiten zu können, da Verlustleistungsanteile, die sich aus Reibungs- und Stoßverlusten zusammensetzen die übertragbare Gesamtleistung vermindern und die erzielten Wandlungsbereiche für den Fahrzeugeinsatz oft nicht ausreichend sind, wird der hydrodynamischen Drehzahl-/Drehmomentwandler 17.3 nur in den unteren Gangstufen, vorzugsweise nur während des Anfahrvorganges zur Leistungsübertragung genutzt. Zur Verbesserung des Übertragungswirkungsgrades wird dieser daher in höheren Leistungsbereichen aus der Leistungsübertragung herausgenommen, insbesondere durch die Überbrückungskupplung 22.3.

Die elektrische Maschine 12.3 ist räumlich zwischen dem Anfahrelement in Form des hydrodynamischen Drehzahl-/Drehmomentwandlers 17.3 und dem mechanischen Drehzahl-/Drehmomentwandler 26 angeordnet. Der Rotor 13.3 der elektrischen Antriebsmaschine 12.3 ist drehfest mit einem Element des mechanischen Drehzahl-/Drehmomentwandlers 26 gekoppelt, hier dem gemeinsam genutzten Steg 30 und damit über den Planetenradsatz 31 der Nachschaltgruppe 27 mit dem Ausgang 7.2d. Der Stator ist im Gehäuse 11.3 gelagert. Bei dieser Ausführung ist der Rotor 13.3 zwar räumlich vor den Nachschaltstufen in Form des mechanischen Drehzahl-/Drehmomentwandlers 26 und Gruppenschaltsatz 27 angeordnet, jedoch in Leistungsflußrichtung betrachtet zwischen Eingang 6.3 und Ausgang 7.3 steht dieser in direkter Triebverbundung mit einem Getriebeelement des mechanischen Drehzahl-/Drehmomentwandlers 26. Bei Integration dieser Antriebseinheit 2.3 in einem Antriebssystem kann dabei der Eingang 6.3 beispielsweise mit einer Verbrennungskraftmaschine gekoppelt werden. Die elektrische Maschine 12.3 kann dabei bei Betrachtung der Antriebseinheit 2.3 für sich allein auch als eigenständige Antriebsquelle für ein mit dem Ausgang 7.3 gekoppeltes Aggregat oder bei Einsatz in Fahrzeugen die zum Antrieb der Räder zwischen dem Ausgang 7.3 und diesem angeordneten Übertragungselementen antreiben. Auch beim Einsatz in Antriebssystemen wie in der Figur 1 dargestellt, das heißt Kopplung des Eingangs 6.3 mit einer Antriebsmaschine in Form einer Verbrennungskraftmaschine kann der Leistungsfluß zwischen Verbrennungskraftmaschine und Antriebseinheit 2.3 vollständig durch Öffnen der schaltbaren Kupplung 22.3 und Entleerung des Kreislaufes des hydrodynamischen Bauelementes 17.3 erfolgen, so daß ein eigenständiger Antrieb über die elektrische Antriebsmaschine 12.3 gewährleistet werden kann.

Des weiteren besteht die Möglichkeit bei Erzeugung der Antriebsleistung allein über die Verbrennungskraftmaschine gleichzeitig durch den generatorischen Betrieb der elektrischen Maschine 12.3 einen Teil der Leistung in ein Netz oder eine Speichereinheit als elektrische Energie einzuspeisen, welche jederzeit wieder abrufbar ist. Bei allen Ausführungen gemäß der Figuren 1 bis 3 bestehen unterschiedliche Möglichkeiten für die Bereitstellung der elektrischen Energie für die elektrische Antriebsmaschine. Diese Energie kann dabei aus Speichereinheiten in Form von Batterien, einer Brennstoffzelle oder Kondensatoren bereitsgestellt werden. Zusätzlich kann auch im Bremsbetrieb Leistung durch den generatorischen Betrieb der elektrischen Maschine 12.3 in eine Speichereinheit oder ein Netz eingespeist werden. Soll ein Mitschleppen des Rotors 13.3 verhindert werden, muß dieser von dem Getriebeelement entkoppelbar sein. Dies kan durch eine entsprechende schaltbare Kupplung 33.3, hier nur strichpunktiert angedeutet, realisiert werden. Ein weiterer wesentlichen Vorteil der erfindungsgemäßen Lösung besteht darin, daß bei Integration der elektrischen Maschine in der Getriebebaueinheit 5 dieser auch die Funktion eines elektrischen Retarders zugeordnet werden kann, das heißt auf eine separate Bremseinrichtung, beispielsweise in Form einer hydrodynamischen Bremse verzichtet werden kann und lediglich durch die Änderung der Bestromung und damit der magnetischen Felder eine Abbremsung des Rotors 13.3 und damit der mit diesem gekoppelten Elemente, insbesondere den Abtrieb 7.3 möglich wird. Die erfindungsgemäß gestaltete Antriebseinheit bietet somit eine Vielzahl von Möglichkeiten hinsichtlich der Erfüllung verschiedenster Funktionen. Die elektrische Antriebsmaschine 12 kann zum einen als Antriebsquelle, zum Starten der Verbrennungskraftmaschine, und Bereitstellungseinrichtung der Leistung zur Beschleunigung fungieren sowie auch durch entsprechende Ansteuerung das Fahren bei Kriechgeschwindigkeit steuern. Des weiteren kann über dieses Aggregat durch entsprechende Ansteuerung insbesondere Veränderung des magnetischen Flusses im entsprechend vom Stator aufgebauten Feld das Fahrzeug am Berg gehalten werden und unter anderem durch entsprechende Steuerkonzeptionen durch die Rückgewinnung von Bremsenergie und entsprechende Wiederausnutzung ein abgasfreies Fahren, zum Beispiel beim Fahren in Fußgängerzonen ermöglicht werden. Ein weiterer wesentlicher Vorteil der erfindungsgemäßen Lösung besteht darin, daß bei vollständiger Unterbrechng des Kraftflusses zwischen dem Eingang 6 und der Verbrennungskraftmaschine bei alleiniger Leistungsbereitstellung über die elektrische Maschine 12 auch die Drehrichtung des Abtriebes 7 beeinflußt werden kann, insbesondere dadurch ein mechanischer Rückwärtsgang eingespart werden kann.

Die Ansteuerung des Leistungstellgliedes der elektrischen Maschine und der Getriebebaueinheit 5 kann dabei über eine gemeinsame Steuervorrichtung erfolgen, welche, hier nicht dargestellt, entweder im Getriebegehäuse, oder außen am Getriebegehäuse oder aber in räumlicher Entfernung dazu angeordnet ist. Ein weiterer wesentlicher Vorteil besteht darin, daß auch zur Kühlung der elektrischen Maschine das gleiche Kühlsystem wie für das Betriebsmittelversorgungssystem verwendet werden kann.

### Bezugszeichenliste

- 1: Antriebssystem
- 2; 2.2a; 2.2.b; 2.2c; 2.2d; 2.3: Antriebsmaschine
- 4; 4.2a; 4.2b: schaltbare Kupplung
- 5; 5.2a; 5.2b; 5.2c; 5.2d; 5.3: Getriebebaueinheit
- 6; 6.2a; 6.2b; 6.2c; 6.2d; 6.3: Eingang
- 7; 7.2a; 7.2b; 7.2c; 7.2d; 7.3: Ausgang
- 8: Wellenstrang
- 9: Differential
- 10.1; 10.2: Räder
- 11; 11.2a; 11.2b; 11.2c; 11.2d; 11.3: Gehäuse
- 12; 12.2a; 12.2b; 12.2c; 12.2c; 12.3: elektrische Maschine
- 13; 13.2a; 13.2b; 13.2c; 13.2d; 13.3: Rotor
- 14; 14.2a; 14.2b; 14.2c; 14.2d; 14.3: Statoreinheit
- 15; 15.2a; 15.2b; 15.2c; 15.2d; 15.3: hydrodynamischer Getriebeteil
- 16; 16.2a; 16.2b; 16.2c; 16.2c; 16.3: mechanischer Getriebeteil
- 17; 17.2a; 17.2b; 17.3: hydrodynamischer Drehzahl/Drehmomentwandler
- 18.2c; 18.2c: hydrodynamische Kupplung
- 19: Ausgang
- 20: Antrieb
- 21.2a; 21.2b; 21.2c; 21.2d: Primärrad
- 22.2a; 22.2b; 22.2c; 22.2d; 22.3: schaltbare Kupplung
- 23.2a; 23.2b; 23.2c; 23.2d; 23.3: Sekundärrad
- 24.2c: Eingang
- 25: Verbundgetriebe
- 26: mechanischer Drehzahl/Drehmomentwandler
- 27: Gruppensatz
- 28: erster Planetenradsatz
- 28.1: Sonnenrad
- 28.2: Planetenrad
- 28.3: Hohlrad
- 29: zweiter Planetenradsatz
- 29.1: Sonnenrad
- 29.2: Planetenrad
- 29.3: Hohlrad
- 30: Planetenträger
- 31: Planetenradsatz
- 32: Sekundärwelle
- 33: schaltbare Kupplung

## Patentansprüche

1. Antriebseinheit (2; 2.2a; 2.2.b; 2.2c; 2.2d; 2.3)
1.1 mit einer Getriebebaueinheit (5; 5.2a; 5.2b; 5.2c; 5.2d; 5.3), mit mindestens einem Eingang (6; 6.2a; 6.2b; 6.2c; 6.2d; 6.3) und mindestens einem Ausgang (7; 7.2a; 7.2b; 7.2c; 7.2d; 7.3) und einem Gehäuse (11; 11.2a; 11.2b; 11.2c; 11.2d; 11.3);
1.2 mit einer wenigstens einer wenigstens als Elektromotor betreibbaren elektrischen Maschine (12; 12.2a; 12.2b; 12.2c; 12.2d; 12.3), umfassend einen Rotor (13; 13.2a; 13.2b; 13.2c; 13.2d; 13.3) und eine Statoreinheit (14; 14.2a; 14.2b; 14.2c; 14.2d; 14.3) **gekennzeichnet durch** die folgenden Merkmale:
1.3 die elektrische Maschine (12; 12.2a; 12.2b; 12.2c; 12.2d; 12.3) ist im Gehäuse (11; 11.2a; 11.2b; 11.2c; 11.2d; 11.3) der Getriebebaueinheit (5; 5.2a; 5.2b; 5.2c; 5.2d; 5.3) integriert;
1.4 der Rotor (13; 13.2a; 13.2b; 13.2c; 13.2d; 13.3) der elektrischen Maschine (12; 12.2a; 12.2b; 12.2c; 12.2d; 12.3) ist mit einem leistungsübertragenden Element zwischen dem Eingang (6; 6.2a; 6.2b; 6.2c; 6.2d; 6.3) und dem Ausgang (7; 7.2a; 7.2b; 7.2c; 7.2d; 7.3) drehfest verbindbar.

2. Antriebseinheit (2; 2.2a; 2.2.b; 2.2c; 2.2d; 2.3) nach Anspruch 1, **dadurch gekennzeichnet, daß** der Rotor (13; 13.2a; 13.2b; 13.2c; 13.2d; 13.3) drehfest mit einem zwischen dem Eingang (6; 6.2a; 6.2b; 6.2c; 6.2d; 6.3) und dem Ausgang (7; 7.2a; 7.2b; 7.2c; 7.2d; 7.3) angeordneten leistungsübertragenden Element verbunden ist.

3. Antriebseinheit (2; 2.2a; 2.2.b; 2.2c; 2.2d; 2.3) nach Anspruch 1, **dadurch gekennzeichnet, daß** der Rotor (13; 13.2a; 13.2b; 13.2c; 13.2d; 13.3) lösbar über eine schaltbare Kupplung (33.2b; 33.3) mit einem zwischen dem Eingang (6; 6.2a; 6.2b; 6.2c; 6.2d; 6.3) und dem Ausgang (7; 7.2a; 7.2b; 7.2c; 7.2d; 7.3) angeordneten leistungsübertragenden Element verbunden ist.

4. Antriebseinheit (2; 2.2b; 2.3) nach Anspruch 3, **dadurch gekennzeichnet, daß** die schaltbare Kupplung in radialer Richtung zwischen Getriebeelement und Rotor (13.2b; 13.3) angeordnet ist.

5. Antriebseinheit (2; 2.2a; 2.2.b; 2.2c; 2.2d; 2.3) nach einem der Ansprüche 1 bis 3, **dadurch gekennzeichnet, daß** der Rotor (13; 13.2a; 13.2b; 13.2c; 13.2d; 13.3) fliegend auf einer mit einem leistungsübertragenden Element gekoppelten Welle oder Verlängerung gelagert ist.

6. Antriebseinheit (2; 2.2b; 2.3) nach Anspruch 5, **dadurch gekennzeichnet, daß** die schaltbare Kupplung (33.2b; 33.3) räumlich in axialer Richtung zwischen Rotor (13.2b; 13.3) und Getriebeelemnt angeordnet ist.

7. Antriebseinheit (2; 2.2a; 2.2.b; 2.2c; 2.2d; 2.3) nach einem der Ansprüche 1 bis 4, **dadurch gekennzeichnet, daß** der Rotor (13; 13.2a; 13.2b; 13.2c; 13.2d; 13.3) auf einer beidseitig gelagerten Verlängerung oder nur dem Getriebeelement verbundenen Welle angeordnet ist.

8. Antriebseinheit (2; 2.2a; 2.2.b; 2.2c; 2.2d; 2.3) nach einem der Ansprüche 1 bis 7, **dadurch gekennzeichnet, daß** der Rotor (13; 13.2a; 13.2b; 13.2c; 13.2d; 13.3) in Leistungsübertragungsrichtung zwischen dem Eingang (6; 6.2a; 6.2b; 6.2c; 6.2d; 6.3) und dem Ausgang (7; 7.2a; 7.2b; 7.2c; 7.2d; 7.3) vor den leistungsübertragenden Elementen der Getriebebaueinheit angeordnet ist.

9. Antriebseinheit (2; 2.2a; 2.2.b; 2.2c; 2.2d; 2.3) nach Anspruch 8, **dadurch gekennzeichnet, daß** in Leistungsflußrichtung zwischen dem Eingang (6; 6.2a; 6.2b; 6.2c; 6.2d; 6.3) und dem Ausgang (7; 7.2a; 7.2b; 7.2c; 7.2d; 7.3) eine schaltbare Kupplung (4; 4.2a; 4.2b) zur Leistungsunterbrechung am Eingang oder vor dem ersten leistungsübertragenden Element angeordnet ist.

10. Antriebseinheit (2; 2.2a; 2.2.b; 2.2c; 2.2d; 2.3) nach Anspruch 9, **dadurch gekennzeichnet, daß** die schaltbare Kupplung (4; 4.2a; 4.2b) im Gehäuse (11; 11.2a; 11.2b) des Getriebes (5; 5.2a; 5.2b) angeordnet ist.

11. Antriebseinheit (2; 2.2a; 2.2.b; 2.2c; 2.2d; 2.3) nach einem der Ansprüche 1 bis 7, **dadurch gekennzeichnet, daß** der Rotor (13; 13.2a; 13.2b; 13.2c; 13.2d; 13.3) in Leistungsflußrichtung vom Eingang (6; 6.2a; 6.2b; 6.2c; 6.2d; 6.3) zum Ausgang (7; 7.2a; 7.2b; 7.2c; 7.2d; 7.3) den leistungsübertragenden Elementen nachgeordnet ist.

12. Antriebseinheit (2; 2.2a; 2.2.b; 2.2c; 2.2d; 2.3) nach einem der Ansprüche 1 bis 7, **dadurch gekennzeichnet, daß** der Rotor (13; 13.2a; 13.2b; 13.2c; 13.2d; 13.3) in Leistungsflußrichtung mit einem zwischen Eingang (6; 6.2a; 6.2b; 6.2c; 6.2d; 6.3) und Ausgang (7; 7.2a; 7.2b; 7.2c; 7.2d; 7.3) angeordneten Übertragungselement gekoppelt ist.

13. Antriebseinheit (2; 2.2a; 2.2.b; 2.2c; 2.2d; 2.3) nach einem der Ansprüche 1 bis 12, **dadurch gekennzeichnet, daß** die Getriebebaueinheit (5; 5.2a; 5.2b; 5.2c; 5.2d; 5.3) als hydrodynamisch-mechanische Verbundgetriebebaueinheit ausgeführt ist, umfassend einen ersten hydrodynamischen Getriebeteil (15; 15.2a; 15.2b; 15.2c; 15.2d; 15.3) und einen zweiten, diesem nachgeschalteten mechanischen Getriebeteil (16; 16.2a; 16.2b; 16.2c; 16.2d; 16.3).

14. Antriebseinheit (2; 2.2a; 2.2.b; 2.2c; 2.2d; 2.3) nach Anspruch 13, **dadurch gekennzeichnet, daß** der Rotor (13; 13.2a; 13.2b; 13.2c; 13.2d; 13.3) der elektrischen Antriebsmaschine (12; 12.2a; 12.2b; 12.2c; 12.2d; 12.3) räumlich in axialer Richtung zwischen dem hydrodynamischen (15; 15.2a; 15.2b; 15.2c; 15.2d; 15.3) und dem mechanischen Getriebeteil (16; 16.2a; 16.2b; 16.2c; 16.2d; 16.3) angeordnet ist.

15. Antriebseinheit (2; 2.2a; 2.2.b; 2.2c; 2.2d; 2.3) nach Anspruch 14, **dadurch gekennzeichnet, daß** der Rotor (13; 13.2a; 13.2b; 13.2c; 13.2d; 13.3) drehfest mit dem Eingang (24.2c) oder mit einem in Kraftflußrichtung dahinter liegenden Element des mechanischen Getriebeteils (16; 16.2a; 16.2b; 16.2c; 16.2d; 16.3) verbunden ist.

16. Antriebseinheit (2; 2.2a; 2.2.b; 2.2c; 2.2d; 2.3) nach einem der Ansprüche 1 bis 15, **dadurch gekennzeichnet, daß** die Getriebebaueinheit (5; 5.2a; 5.2b; 5.2c; 5.2d; 5.3) ein Automatgetriebe ist und diesem eine Steuervorrichtung zugeordnet ist.

17. Antriebseinheit (2; 2.2a; 2.2.b; 2.2c; 2.2d; 2.3) nach Anspruch 16, **dadurch gekennzeichnet, daß** die Steuereinheit gemeinsam von der Getriebebaueinheit (5; 5.2a; 5.2b; 5.2c; 5.2d; 5.3) und der elektrischen Maschine (12; 12.2a; 12.2b; 12.2c; 12.2d; 12.3) genutzt wird.

18. Antriebseinheit nach einem der Ansprüche 1 bis 15, **dadurch gekennzeichnet, daß** die Getriebebaueinheit ein automatisiertes Schaltgetriebe ist.

19. Antriebseinheit nach einem der Ansprüche 1 bis 15, **dadurch gekennzeichnet, daß** die Getriebebaueinheit ein stufenloses Getriebe ist.

20. Antriebseinheit nach einem der Ansprüche 1 bis 15, **dadurch gekennzeichnet, daß** die Getriebebaueinheit ein Schaltgetriebe ist.

21. Antriebseinheit (2; 2.2a; 2.2.b; 2.2c; 2.2d; 2.3) nach einem der Ansprüche 1 bis 20, **dadurch gekennzeichnet, daß** die Getriebebaueinheit (5; 5.2a; 5.2b; 5.2c; 5.2d; 5.3) ein Betriebssteuerund/oder Schmiermittelversorgungssystem aufweist, welchem eine Kühleinrichtung zugeordnet ist und daß die Kühleinrichtung auch zur Kühlung der elektrischen Antriebsmaschine (12; 12.2a; 12.2b; 12.2c; 12.2d; 12.3) genutzt wird.

22. Antriebseinheit (2; 2.2a; 2.2.b; 2.2c; 2.2d; 2.3) nach einem der Ansprüche 1 bis 21, **dadurch gekennzeichnet, daß** die Satoreinheit, umfassend nur einen Stator oder einen Innen- und einen Außenstator, wobei die einzelnen Statoren aus mehreren Einzelstatorelementen bestehen können, ortsfest im Gehäuse (11; 11.2a; 11.2b; 11.2c; 11.2d; 11.3) gelagert ist.

23. Antriebseinheit (2; 2.2a; 2.b; 2.2c; 2.2d; 2.3) nach Anspruch 22, **dadurch gekennzeichnet, daß** einzelne Elemente der Statoreinheit (14; 14.2a; 14.2b; 14.2c; 14.2d; 14.3) direkt vom Gehäuse (11; 11.2a; 11.2b; 11.2c; 11.2d; 11.3) gebildet werden.

24. Antriebssystem (1) mit einer Antriebsmaschine (3) und einer, mit dieser koppelbaren Antriebseinheit (2; 2.2a; 2.b; 2.2c; 2.2d; 2.3) nach einem der Ansprüche 1 bis 20.

25. Antriebssystem (1) nach Anspruch 24, **dadurch gekennzeichnet, daß** die Antriebsmaschine (3) als Verbrennungskraftmaschine ausgeführt ist.
